Europäisches Patentamt

European Patent Office

Office européen des brevets

(19)

(11) **EP 0 707 374 B1**

(12) **FASCICULE DE BREVET EUROPEEN**

(45) Date de publication et mention
de la délivrance du brevet:
**02.01.2004 Bulletin 2004/01**

(51) Int Cl.⁷: **H02K 21/38**

(21) Numéro de dépôt: **95402266.1**

(22) Date de dépôt: **09.10.1995**

(54) **Actionneurs hybrides monophasés à commutation de flux**

Einphasigen Hybridbetätiger mit Flussschaltung

Monophase hybrid actuators with flux commutation

(84) Etats contractants désignés:
**DE ES GB IT**

(30) Priorité: **10.10.1994 FR 9412063**

(43) Date de publication de la demande:
**17.04.1996 Bulletin 1996/16**

(73) Titulaire: **CENTRE NATIONAL DE
LA RECHERCHE SCIENTIFIQUE (CNRS)
75016 Paris (FR)**

(72) Inventeurs:
• **Lucidarme, Jean
F-91700 Ste Geneviève des Bois (FR)**

• **Multon, Bernard
F-94230 Fresnes (FR)**
• **Prevond, Laurent
F-93250 Villemomble (FR)**

(74) Mandataire: **Pontet, Bernard
Pontet Allano & Associés S.E.L.A.R.L.
25, rue Jean-Rostand
Parc Club Orsay Université
91893 Orsay Cédex (FR)**

(56) Documents cités:
**EP-A- 0 528 750  CH-A- 521 045
FR-A- 2 085 279  FR-A- 2 102 530**

**Description**

La précédente invention concerne des actionneurs hybrides monophasés à commutation de flux.

Dans de nombreux secteurs de l'équipement grand-public et industriel, existe un besoin en petits actionneurs économiques, robustes et nécessitant le moins possible de connectique et de composants de commande et d'alimentation. On peut déjà trouver dans le commerce des actionneurs visant ce créneau. On connaît notamment des actionneurs de type hybride mettant en oeuvre des aimants permanents et présentant de bonnes performances en termes de couple par unité de masse. Par ailleurs, le souci de proposer une alimentation et une connectique très simple conduit inévitablement à se tourner vers des actionneurs monophasés. Mais se pose alors le problème du démarrage pour des actionneurs hybrides monophasés. En effet, avec les structures classiques d'actionneurs hybrides, il existe inévitablement des positions angulaires dans lesquelles le couple hybride est nul, interdisant ainsi toute possibilité de démarrage. Il est certes possible de prévoir au sein des actionneurs hybrides un dispositif permettant de placer systématiquement le rotor dans une position offrant un couple hybride non nul à l'arrêt, en utilisant par exemple un aimant auxiliaire. Ceci présente cependant l'inconvénient d'induire une dissymétrie dans la structure magnétique de l'actionneur et conduit généralement à des surcoûts de fabrication.

Le document EP-A-528750 divulgue un moteur hybride monophasé à réluctance variable comprenant une partie fixe d'induit comportant des pièces magnétiques statoriques munies de pôles ou dents statoriques et un ou plusieurs bobinages d'induit, une partie mobile agencée pour commuter du flux magnétique et pourvue de pôles ou dents de commutation, et des moyens d'aimantation permanente, les parties respectivement d'induit et de commutation présentent des caractéristiques géométriques étant liées par au moins une condition géométrique prédéterminée du type

$$\theta_r \geq \theta_s + \theta_b$$

Où $\theta_r$, $\theta_s$ et $\theta_b$ représentent respectivement l'ouverture angulaire d'un pôle ou dent de commutation, l'ouverture angulaire d'un pôle ou dent induit, et l'ouverture angulaire d'un espace inter-pôles ou inter-dents d'induit.

Mais il ne s'agit pas d'un moteur à commutation de flux, du fait que dans ce moteur, le flux généré par l'aimant permanent n'est pas commandé lorsque le rotor tourne. De plus, l'aimant permanent inclus dans ce moteur n'a qu'une fonction d'indexation pour placer systématiquement le rotor au repos dans une position offrant un couple hybride non nul à l'arrêt et n'a aucune fonction de conversion d'énergie telle que celle procurée par les aimants permanents d'un actionneur hybride à commutation de flux.

Le but de la présente invention est de remédier à ces inconvénients en proposant des moteurs hybrides à commutation de flux monophasés aptes à démarrer à condition que le couple résistant statique soit suffisamment faible (inférieur au couple de détente), et de réalisation simple et économique.

Suivant l'invention, l'actionneur hybride monophasé à commutation de flux comprenant une partie fixe d'induit comportant des pièces magnétiques statoriques munies de pôles ou dents statoriques et un ou plusieurs bobinages d'induit, une partie mobile agencée pour commuter du flux magnétique et pourvue de pôles ou dents de commutation, et des moyens d'aimantation permanente, les parties respectivement d'induit et de commutation présentent des caractéristiques géométriques étant liées par au moins une condition géométrique prédéterminée :

$$\theta_r \geq \theta_s + \theta_b$$

Où $\theta_r$, $\theta_s$ et $\theta_b$ représentent respectivement l'ouverture angulaire d'un pôle ou dent de commutation, l'ouverture angulaire d'un pôle ou dent induit, et l'ouverture angulaire d'un espace inter-pôles ou inter-dents d'induit, est caractérisé en ce que les moyens d'aimantation permanente coopèrent avec la parie mobile de commutation pour générer un ou plusieurs flux magnétiques qui sont alternativement commutés à travers le ou les bobinages d'induit par passage dans ladite partie mobile de commutation, ladite partie mobile de commutation de flux comportant au moins deux ensembles de commutation dotés de pôles ou dents de commutation et reliés entre eux par une pièce ferromagnétique, et la partie comprenant des pôles ou dents d'induit en correspondance avec les deux dents ou pôles des deux ensembles de commutation.

Ainsi, avec l'invention, en prenant l'option d'une variation alternative du flux magnétique des aimants dans les bobinages, on offre la possibilité d'une alimentation monophasée bidirectionnelle très simple. En outre, c'est à travers les caractéristiques géométriques des parties d'induit et de commutation qu'on obtient la possibilité d'un couple hybride non nul à l'arrêt, sans ajout d'un élément de dissymétrie de la structure magnétique.

Selon un premier type de structure, l'actionneur comprend, au titre des moyens d'aimantation permanente, un ou plusieurs aimants disposés axialement et générant un flux magnétique global qui est alternativement commuté par passage dans la partie de commutation. On peut alors prévoir que les aimants axiaux soient disposés sur le rotor ou bien sur le stator dudit actionneur et que la partie d'induit statorique comprenne deux parties statoriques dotées de dents ou pôles statoriques, de structures et positions angulaires identiques, entre lesquelles sont disposés un ou plusieurs aimants permanents axiaux pour générer un flux magnétique global.

Dans un mode pratique de réalisation correspondant à ce premier type de structure, la partie de commutation comprend une portion centrale cylindrique comportant à chacune de ses extrémités une partie rotorique agencée pour être en correspondance avec une partie statorique, chaque partie rotorique comprenant un nombre de dents ou pôles moitié du nombre de dents ou pôles de la partie statorique correspondante.

Dans une autre forme réalisation d'un rotor de commutation de flux pour un actionneur selon l'invention, la partie de commutation comprend un cylindre en matériau magnétique préalablement usiné pour être pourvu sur sa périphérie d'une couronne inclinée sur la longueur de ce cylindre, cette couronne assurant la fonction de commutation de flux d'une pièce statorique à l'autre.

Lorsqu'on souhaite obtenir un actionneur présentant une très faible inertie, il est avantageux de concevoir un actionneur selon l'invention dans lequel la partie d'induit statorique comprend deux parties cylindriques concentriques respectivement extérieure et intérieure comportant chacune à leurs extrémités une première et une seconde pièces statoriques respectivement extérieure et intérieure comportant des dents ou pôles statoriques, un ou plusieurs aimants axiaux globaux de forme annulaire respectivement extérieurs et intérieurs étant disposés respectivement entre les première et seconde pièces statoriques extérieures et entre les première et seconde pièces statoriques le rotor étant en forme de cloche et comprenant une partie cylindrique rotorique faisant partie de commutation. Cette partie cylindrique est perforée pour constituer deux ensembles de pôles de commutation respectivement en vis à vis des dents ou pôles statoriques des première et seconde pièces statoriques respectivement inférieures et extérieures, le nombre de dents ou pôles d'un ensemble étant moitié du nombre de dents ou pôles statoriques de la pièce statorique correspondante. Dans cette configuration, la partie cylindrique de commutation est perforée pour constituer autant d'ensembles de pôles de commutation que le nombre de pièces statoriques.

Pour certaines applications spécifiques nécessitant un rotor extérieur, la partie d'induit fixe est intérieure et comprend au moins deux parties statoriques comportant plusieurs pôles ou dents statoriques et entre lesquelles sont disposés des moyens d'aimantation permanente pour générer un flux magnétique axial, et la partie de commutation mobile comporte un cylindre extérieur entourant la partie de commutation et comprenant plusieurs ensembles de perforations, chaque ensemble de perforations correspondant une pièce statorique et le nombre de perforations par ensemble étant moitié du nombre de dents ou pôles statoriques d'une pièce statorique.

Dans un deuxième type de structure selon l'invention, un actionneur comprend, au titre des moyens d'aimantation permanente, des aimants alternés disposés axialement, et la partie de commutation comprend au moins deux pièces statoriques ou rotoriques comportant chacune des dents ou pôles statoriques ou rotoriques en nombre moitié du nombre d'aimants alternés.

Dans un premier mode de réalisation de ce second type de structure, les aimants alternés sont disposés axialement sur le rotor dudit actionneur, ce rotor comprend deux ensembles de pièces polaires disposées respectivement aux extrémités de chaque aimant pour diriger radialement le flux généré par cet aimant, chaque ensemble étant en correspondance avec une pièce statorique et constituant la partie de commutation, et en ce que la partie d'induit comprend un bobinage global de type solénoïdal inséré entre les deux pièces statoriques.

Dans une seconde forme de réalisation de ce second type de structure, les aimants alternés sont disposés axialement sur le stator dudit actionneur entre les deux pièces statoriques qui insèrent également un bobinage global de type solénoïdal et la partie de commutation comprend une portion cylindrique comportant à ses extrémités deux pièces de commutation respectivement en vis à vis des pièces statoriques.

Dans un troisième type de structure d'actionneur selon l'invention, il est proposé un actionneur comprenant, au titre des moyens d'aimantation permanente, des aimants alternés disposés azimutalement.

Dans une première forme de réalisation, la partie d'induit comprend des pièces polaires statoriques se succédant circonférentiellement et entre lesquelles sont disposés les aimants alternés azimutaux, et un bobinage global de type solénoïdal, et la partie de commutation comprend une portion cylindrique traversant le bobinage et à ses extrémités, situées de part et d'autre du bobinage, deux ensembles de dents décalées angulairement de telle sorte que lorsqu'une dent d'un ensemble se place devant une pièce polaire statorique, la dent décalée correspondante de l'autre ensemble se place devant la pièce polaire suivante du stator. Le nombre de dents de chaque ensemble est égal à la moitié du nombre de pièces polaires statoriques.

Dans une variante de réalisation, les aimants azimutaux sont disposés au rotor dudit actionneur qui constitue la partie de commutation comprenant en outre des pièces polaires disposées entre chaque aimant alterné et en nombre deux fois supérieur au nombre de pôles ou dents de chaque pièce statorique.

Dans une seconde forme de réalisation de ce troisième type, la partie d'induit comprend plusieurs circuits magnétiques locaux en forme de U à chacun desquels est associé un bobinage local d'induit et entre chacun desquels sont disposés des aimants alternés azimutaux.

Dans une autre forme de réalisation, les aimants azimutaux sont disposés au rotor dudit actionneur qui constitue la partie de commutation comprenant en outre des pièces polaires disposées entre chaque aimant alterné et en nombre égal au nombre de pôles ou dents de chaque pièce statorique.

Dans une quatrième structure d'actionneur selon l'invention, les aimants sont disposés radialement, aussi bien au stator qu'au rotor.

Dans une première version de cette quatrième structure, les aimants sont disposés radialement au stator et le bobinage d'induit est solénoïdal. Une variante de cette quatrième structure consiste à placer les aimants permanents au rotor.

Un actionneur selon l'invention est en pratique associé à des moyens d'alimentation et de commande agencés pour permettre un mode de fonctionnement autopiloté. Ces moyens d'alimentation et de commande sont agencés pour permettre un mode de fonctionnement pas-à-pas. On peut également prévoir que ces moyens d'alimentation et de commande soient agencés pour permettre un mode de fonctionnement synchrone. Il peut être également avantageux que les moyens d'alimentation et de commande soient agencés pour permettre un mode de débattement limité.

Les actionneurs selon l'invention, qui peuvent être tournants ou lisses, sont ainsi caractérisés par les trois éléments suivants :

- le flux inducteur produit par au moins un aimant permanent à travers un bobinage d'induit varie de façon alternative, c'est à dire avec changement de signe, ce qui distingue ces actionneurs de machines où l'aimant n'a qu'un rôle de polarisation telles que les machines à réluctance excitées. Cette variation est obtenue par la modification du trajet des lignes de champ inducteur au cours du déplacement relatif des parties fixes et mobiles de l'actionneur ;
- à l'arrêt, position dans laquelle le flux fourni par le ou les aimants inducteurs est maximum et qui est stable avec un effort de détente nul, les parties fixes et mobiles de l'actionneur se trouvent dans une position privilégiée dans laquelle le couple moteur hybride créé par l'interaction des champs induits et inducteurs est non nul et même proche de son maximum.

Cette position privilégiée est obtenue par une simple condition géométrique portant sur les dimensions caractéristiques des parties répétitives (ou motifs) des parties fixes et mobiles et ne peut être assimilée à des techniques antérieures de démarrage plus ou moins compliquées consistant à prévoir des pôles dissymétriques ou encore des spires ou aimants supplémentaires visant à dissymétriser la machine, ce qui revient à créer des pôles ou des phases supplémentaires ;

- les bobinages d'induit se présentent sous la forme de bobines rapportées de fabrication simple et permettant un bon taux de remplissage. On peut ainsi envisager soit de simples solénoïdes traversés par un flux axial, soit des ouvertures d'encoches suffisamment larges (sans isthme). Le fait de satisfaire à la condition géométrique de démarrage selon l'invention aboutit d'ailleurs à réaliser de telles ouvertures relativement larges.

On peut ainsi obtenir des actionneurs hybrides monophasés de construction simple, avec une connectique réduite au maximum (deux fils) et ne requérant qu'une alimentation simplifiée.

Les actionneurs selon l'invention peuvent être alimentés selon quatre modes présentés ci-après :

- un mode autopiloté: la commutation du courant est effectuée en synchronisme avec la position par des moyens électroniques (onduleur monophasé) ou mécaniques (collecteur) ou encore hybrides (combinaison des deux moyens précités) ;
- un mode pas à pas ;
- un mode synchrone à la fréquence du réseau industriel; le démarrage ne peut alors se faire que dans des conditions particulières de moment d'inertie et d'amortissement mécanique de la charge; dans ce cas, le sens de rotation est a priori indéterminé ;
- un mode de débattement limité: le bobinage peut être alimenté par un courant continu pour produire une force avec des déplacements limités à une demi-période électrique (au maximum, un demi-tour).

D'autres particularités et avantages de l'invention apparaîtront encore dans la description ci-après. Aux dessins annexés donnés à titre d'exemples non limitatifs:

- la figure 1 illustre un exemple de réalisation d'une première structure d'actionneur selon l'invention mettant en oeuvre un aimant axial annulaire, dans une configuration bipolaire ;
- la figure 2 représente une première forme de réalisation d'un rotor bipolaire pour l'actionneur de la figure 1 ;
- la figure 3 représente une seconde forme de réalisation d'un rotor produisant une variation continue de flux, et adapté à une grande vitesse de rotation ;
- la figure 4 représente un actionneur selon l'invention obtenu par montage en série d'au moins deux machines de la figure 3 ;
- la figure 5 représente un exemple de réalisation d'un actionneur à aimants axiaux selon l'invention, dans une configuration quadripolaire;
- la figure 6 représente une pièce de remplissage aérodynamique prévue pour équiper un rotor bipolaire dans un actionneur selon l'invention ;
- la figure 7 illustre plusieurs positions caractéristiques du rotor d'un actionneur selon l'invention ;
- la figure 8 représente un actionneur à aimants axiaux selon l'invention dans une configuration octopolaire ;

- la figure 9 est une vue partielle d'un actionneur selon l'invention, présentant une structure de type moteur-cloche ;
- la figure 10 illustre une structure inversée à rotor extérieur, dite en cloche, d'un actionneur selon l'invention ;
- la figure 11 représente sous forme développée une première position relative caractéristique d'une partie d'induit et d'une partie de commutation d'un actionneur selon l'invention ;
- la figure 12 représente sous forme développée une seconde position relative caractéristique d'une partie d'induit et d'une partie de commutation d'un actionneur selon l'invention ;
- la figure 13 représente sous forme développée cette seconde position relative dans le cas d'un actionneur comprenant plusieurs ensembles de commutation adjacents axialement (mise en série) ;
- la figure 14A illustre une seconde structure d'actionneur selon l'invention, mettant en oeuvre des aimants axiaux alternés, dans une première version où les aimants sont placés au rotor ;
- la figure 14B illustre une seconde version de cette second structure d'actionneur, dans laquelle les aimants sont placés au stator ;
- la figure 15 illustre une troisième structure d'actionneur selon l'invention, mettant en oeuvre des aimants azimutaux, dans une première version où le bobinage est solénoïdal et les aimants sont placés au stator ;
- la figure 16 est une vue d'une variante de la figure 15, mais avec les aimants placés au rotor ;
- la figure 17 illustre une seconde version de la structure à aimants azimutaux, dans laquelle les aimants sont placés au stator et le circuit magnétique statorique comprend plusieurs circuits de flux locaux et des bobinages locaux ;
- la figure 18 est une vue d'une variante de la figure 17, dans laquelle les aimants sont placés au rotor ;
- la figure 19 représente une quatrième structure d'actionneur selon l'invention, avec des aimants radiaux situés au stator; et
- la figure 20 représente une variante de cette quatrième structure, avec des aimants radiaux situés au rotor.

On va maintenant décrire plusieurs structures possibles d'actionneurs selon l'invention, qui se distinguent essentiellement par la topologie des aimants inducteurs. Les structures qui vont être décrites sont tournantes, mais on peut aisément concevoir des structures linéaires sur des principes identiques, suivant des techniques classiques de transposition.

D'une manière générale, on définit la partie induite comme celle supportant le bobinage (éventuellement stator), la partie commutation de flux comme l'autre partie (éventuellement rotor). Les aimants peuvent être placés dans l'une ou l'autre des parties, ou dans les deux en même temps.

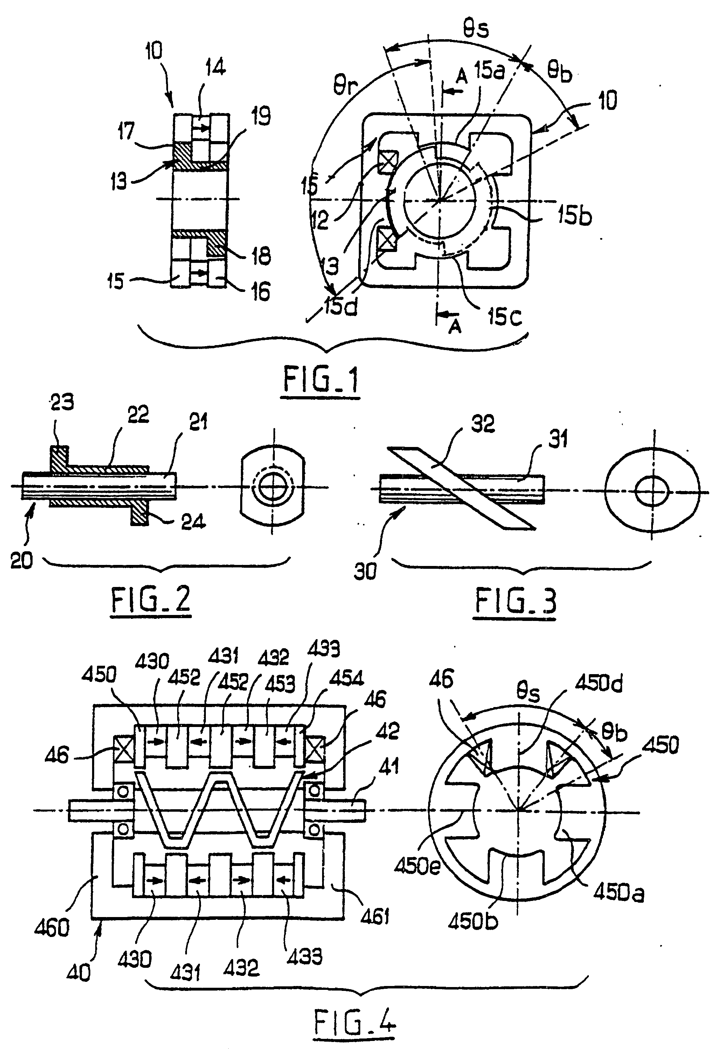

On considère tout d'abord des actionneurs selon l'invention, comprenant des aimants axiaux globaux, en référence aux figures 1 à 13. Dans un première forme de réalisation représentée en figure 1, un actionneur bipolaire 10 comporte un stator comprenant une partie d'induit constituée de deux circuits magnétiques statoriques 15, 16 entre lesquels est inséré un aimant annulaire 14, et muni d'un bobinage monophasé 12, et un rotor 13 ferromagnétique massif comprenant une partie cylindrique centrale 19 et à chacune de ses extrémité axiales une pièce polaire 17, 18. Vues axialement, les pièces polaires 17, 18 sont diamétralement opposées. Chaque circuit magnétique statorique 15 comporte quatre pôles statoriques 15a-d répartis autour de l'axe. Chaque pôle de la pièce 15 est aligné axialement avec un pôle de la pièce 16.

La structure de cet actionneur est notamment caractérisée par les paramètres angulaires suivants:

$\theta_r$ :ouverture angulaire d'un pôle ou dent rotorique,
$\theta_s$ :ouverture angulaire d'un pôle ou dent statorique,
$\theta_b$ :ouverture angulaire d'un espace inter-pôle statorique.

Il a été établi et démontré expérimentalement sur des prototypes qu'un couple non nul à l'arrêt peut être obtenu si les paramètres angulaires précités satisfont sensiblement la condition suivante:

$$\theta_r\text{-}\theta_b \geq \theta_s \Rightarrow \theta_r \geq \theta_s +\theta_b \qquad (1)$$

Il faut également satisfaire la relation suivante:

$$\theta_r < \theta_s +2\theta_b$$

car il ne faut pas que les dents qui se mettent face aux encoches court-circuitent les aimants. Les aimants peuvent être placés au rotor, au stator, ou aux deux.

Cette structure présente les trois caractéristiques essentielles de l'invention :

- le flux produit par l'aimant varie de façon alternative à travers les bobinages d'induit ;
- la satisfaction de la condition géométrique $\theta_r \geq \theta_s +\theta_b$ permet un couple non nul à l'arrêt ;
- les grandes ouvertures d'encoches (pas d'isthme d'encoche ou d'épanouissement polaire) obtenues par principe dans ce type de structure permettent de mettre en oeuvre des bobinages rapportés.

Dans cette structure, le rotor prend automatiquement, à l'arrêt, une des positions telles que celle représentée à la figure 1 (vue de droite), c'est à dire avec chaque pôle rotorique chevauchant une encoche statorique, car ainsi, compte-tenu de la relation (1), la surface du pôle rotorique qui est couverte par les dents statoriques est plus grande que si le pôle rotorique se centrait sur une dent statorique.

Dans le cas particulier de la structure bipolaire qui vient d'être décrite, on peut mettre en avant les caractéristiques suivantes :

- possibilité d'un débattement limité sur près d'un demi-tour ;
- machine rapide.

Plusieurs structures de rotor peuvent être envisagées pour l'actionneur représenté en figure 1. Ainsi, en référence à la figure 2, on peut prévoir un rotor 20 comprenant une partie magnétique active 22 emmanchée sur un arbre 21 de préférence amagnétique, cette pièce magnétique active comportant à ses extrémités des pôles 23, 24 diamétralement opposés.

On peut également envisager un rotor 30 permettant une variation progressive du flux commuté, en référence à la figure 3.

Dans ce cas, la condition géométrique $\theta_r \geq \theta_s + \theta_b$ est encore valable et peut être réalisée en ajustant les épaisseurs axiales.

La structure à aimant axial qui vient d'être décrite peut également être généralisée. Ainsi, on peut prévoir une mise en série de plusieurs actionneurs. Les aimants peuvent être placés au rotor ou au stator. La structure peut être n-polaire.

En extrapolant une telle structure de rotor, on peut concevoir un actionneur 40 constitué en quelque sorte d'une cascade d'actionneurs élémentaires selon l'invention, en référence à la figure 4. Le stator de cet actionneur comprend par exemple deux demi-coques 460, 461, à l'intérieur desquelles sont empilés une succession de plaques statoriques 450, 451, 452, 453, 454, et d'aimants annulaires 430, 431, 432, 433. Chaque plaque statorique 450, qui peut être feuilletée, comporte par exemple quatre pôles 450a, 450b, 450c, 450d. Le rotor 42 de cet actionneur 40 présente une structure périodique semblable à celle représentée en figure 3 et est monté sur un arbre 41 de préférence amagnétique. Plusieurs bobinages tels 46 mis en série et placés dans des encoches créent le champ induit.

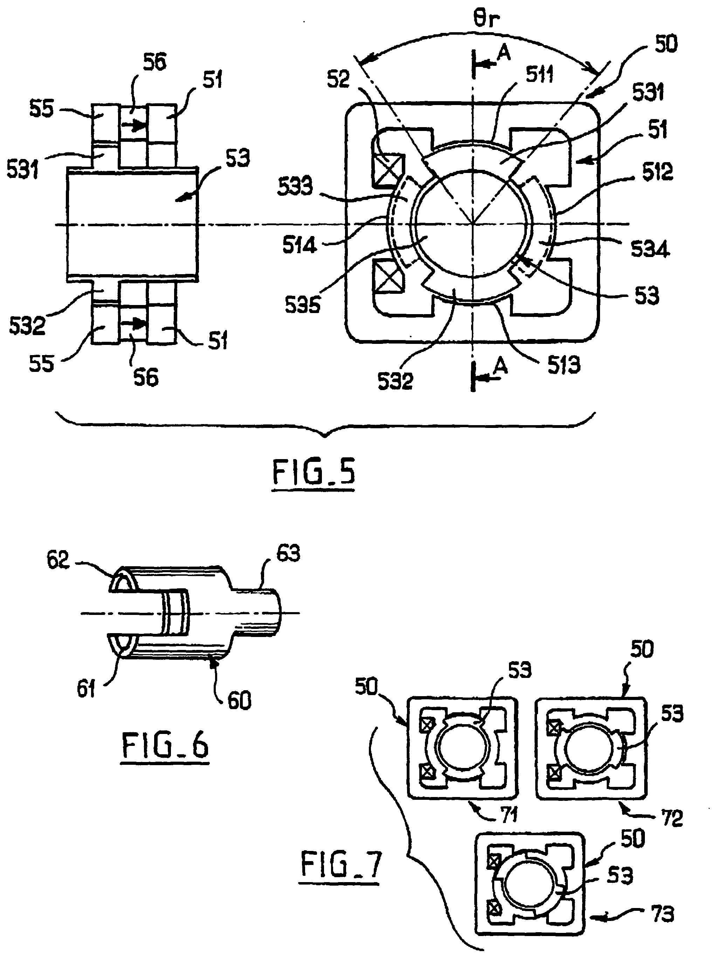

Toujours dans le cadre de ce premier type de structure d'actionneur à aimantation globale, on peut réaliser un actionneur tétrapolaire 50, en référence à la figure 5. La structure tétrapolaire présente l'avantage de présenter un bon compromis entre le couple fourni et les fréquences d'alimentation. Le stator de cet actionneur est constitué de deux plaques ferromagnétiques 55, 51, qui peuvent être feuilletées, séparées par un ou plusieurs aimants 56 générant un flux magnétique axial. Chaque plaque magnétique 51 est découpée de façon à présenter quatre pôles statoriques 511, 512, 513, 514. Les bobinages 52 (un seul est représenté) sont disposés autour des dents ou pôles statoriques 511, 512, 513, 514.

Le rotor 53 a la forme d'un cylindre creux comprenant à chaque extrémité deux pôles diamétralement opposés 531, 532; 533, 534. les deux paires de pôles diamétralement opposées sont décalées de 90 degrés. Dans le cas d'applications à grande vitesse périphérique, il est préférable de munir le rotor d'une pièce 60 pour remplir les volumes creux du rotor et ainsi considérablement améliorer les caractéristiques aérodynamiques du rotor. Cette pièce, représentée en figure 6, peut être réalisée à partir d'un cylindre creux qui est usiné pour présenter des parties 61, 62, 63 complémentaires des pôles du rotor.

Une variante par rapport à l'exemple des figures 5 et 6 pourrait consister à placer l'aimant au rotor entre deux plaques constituant les deux ensembles de pôles rotoriques. Il est encore possible de prévoir un tel rotor en combinaison avec un stator tel que représenté en figure 5, les deux aimants étant alors aimantés en sens opposés.

On peut distinguer, en référence à la figure 7, trois positions caractéristiques 71, 72, 73 du rotor 53 par rapport au stator 51 de l'actionneur 50. Ces trois positions caractéristiques sont des positions d'équilibre sous l'action du champ inducteur des aimants, l'actionneur n'étant pas alimenté. Les deux premières positions 71, 72 sont des positions où le flux généré par les aimants traversant les bobinages induits est maximum. Ce flux s'inverse entre ces positions créant ainsi aux bornes des bobinages une tension alternative lorsque le rotor tourne. Il suffit donc pour obtenir un fonctionnement moteur d'injecter un courant induit en synchronisme avec la force électromotrice générée. La troisième position 73 est une position où le flux inducteur fournit une contribution nulle à travers les bobinages. Ce flux inducteur se referme en effet et il peut être important et même supérieur aux flux rencontrés dans les positions précitées 71, 72. C'est lorsque le flux inducteur est supérieur à celui des deux autres positions d'équilibres, que le rotor se place dans la troisième position . Or dans cette position, le couple hybride moteur est maximum et la machine peut démarrer avec un sens prédéterminé par la polarité du courant induit.

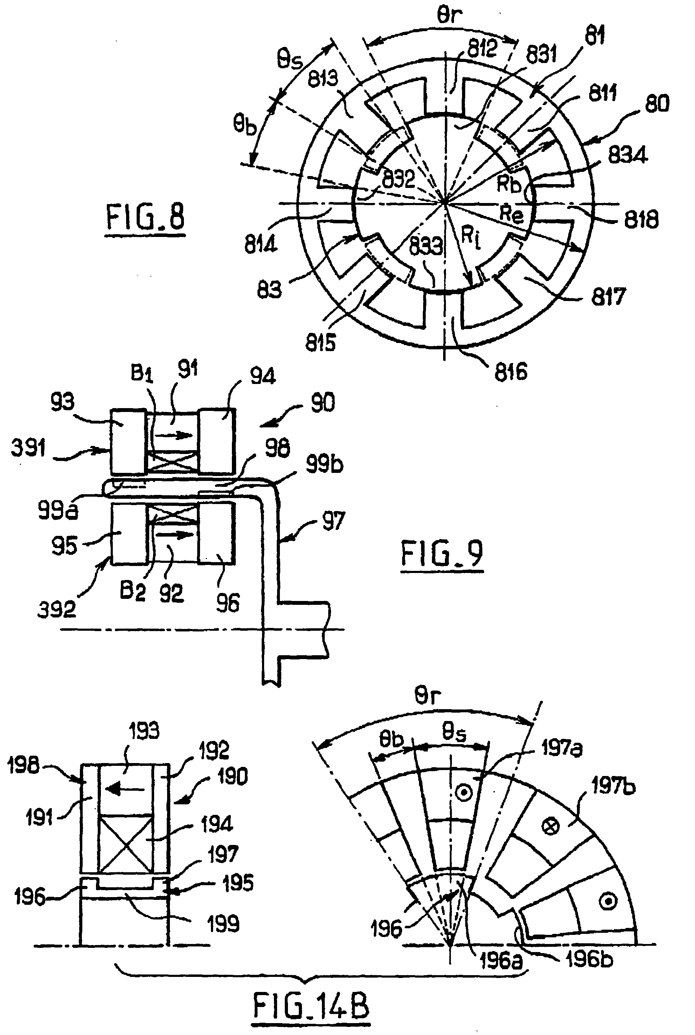

La structure d'actionneur à aimants axiaux globaux peut également être mise en oeuvre pour un actionneur n-polaire, par exemple octopolaire (figure 8). Dans ce cas, chaque plaque statorique d'extrémité 81 comprend huit dents ou pôles 811-818 et le rotor 83 comprend à chacune de ses extrémités quatre dents ou pôles 831-834. Les plaques statoriques et le rotor sont conçus de sorte que leurs paramètres angulaires caractéristiques satisfont la condition géométrique : $\theta_r \geq \theta_s + \theta_b$ .

On peut également prévoir dans le cadre de la présente invention, une structure de rotor en cloche, en référence à la figure 9. Dans ce cas, le stator de l'actionneur 90 comprend deux parties cylindriques concentriques 391, 392 comprenant chacune des couronnes statoriques d'extrémité 93, 94; 95, 96 entre lesquelles sont placés un aimant annulaire 91, 92 et un bobinage solénoïdal B1, B2. Les deux bobinages B1, B2 sont concentriques et disposés de part et d'autre du rotor 97 entre les deux aimants annulaires 91, 92. Le rotor 97 en forme de cloche comprend une partie cylindrique rotorique pouvant se déplacer dans l'espace d'entrefer entre les deux parties statoriques et percée de trous 99a, 99b de formes et dispositions appropriées pour constituer une partie de commutation du flux magnétique coopérant avec les couronnes statoriques d'extrémité 93, 96. Un rotor-cloche perforé permet d'obtenir des accélérations élevées, par la combinaison d'un fort couple et d'une faible inertie.

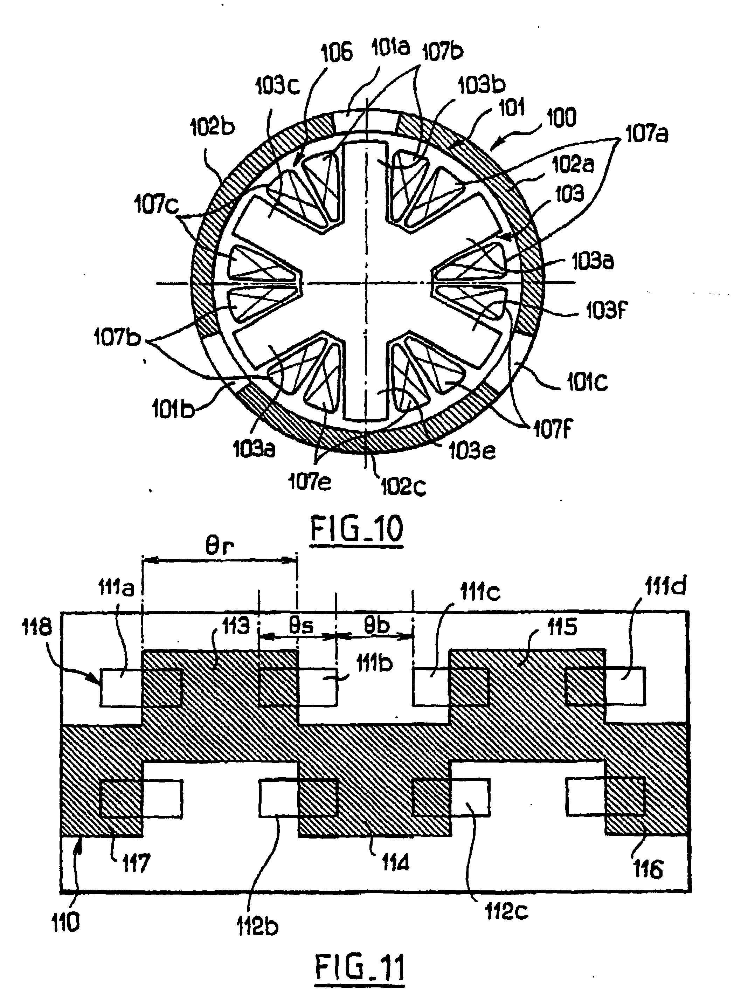

Certaines applications peuvent nécessiter un actionneur de structure inversée comprenant un rotor extérieur et un stator intérieur. La présente invention s'étend à ce type de structure inversée, en référence à la figure 10, qui est une vue en coupe au niveau d'une partie statorique d'extrémité où ne figurent pas les aimants. L'actionneur 100 comprend à chaque extrémité, une partie d'induit statorique intérieure 103 et une partie de commutation rotorique extérieure 101. A titre d'exemple, la partie d'induit 103 comprend six dents ou pôles 103a-f et la partie de commutation 101 est réalisée sous la forme d'un cylindre en matériau ferromagnétique percé de trois perforations (trous) 101a-c de forme appropriée pour constituer en quelque sorte des pôles rotoriques 102a-c. La partie d'induit 103 comporte des bobinages 107a-f disposés respectivement autour des dents 103a-f.

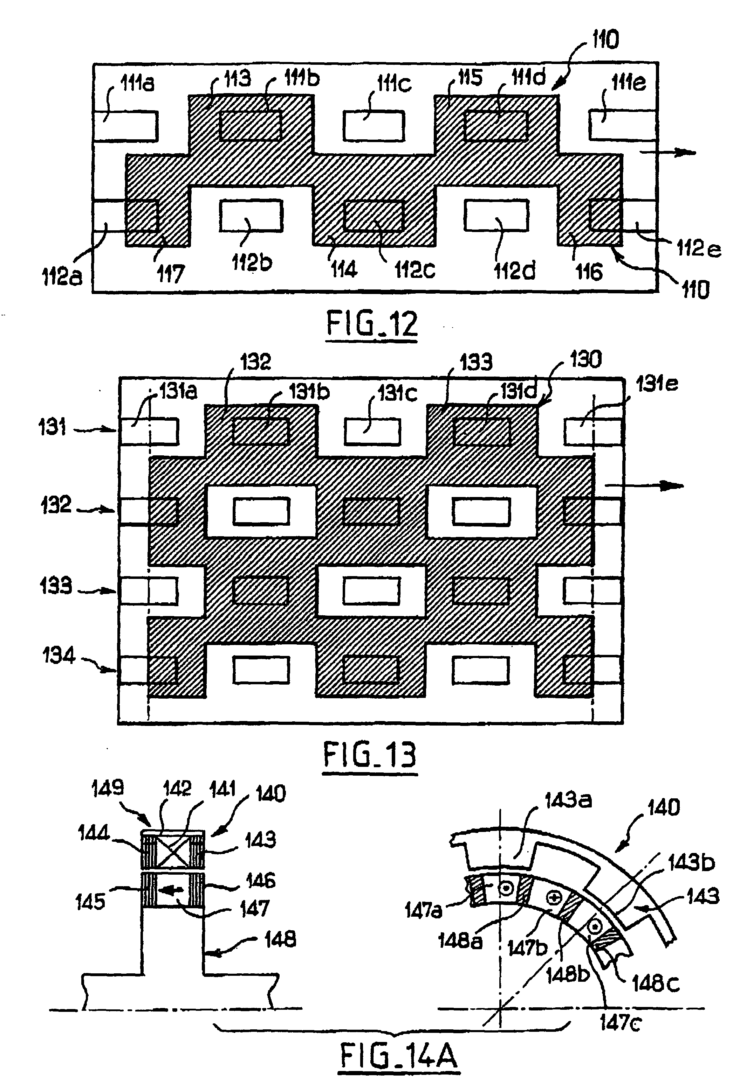

Si on considère un actionneur selon l'invention présentant une structure inversée telle que celle illustrée en figure 10, on comprendra mieux le fonctionnement de cet actionneur en se référant aux figures 11 et 12 qui représentent, par un développement plan des cylindres respectivement rotorique 110 et statorique 118, deux positions relatives caractéristiques des dents d'induit et des perforations, dans une hypothèse où la condition géométrique sur les angles est satisfaite, à savoir, $\theta_r \geq \theta_s + \theta_b$. Dans la première position (figure 11), les dents 117, 113, 114, 115, 116 de la partie de commutation 110 sont en correspondance partielle avec deux dents statoriques adjacentes 111a, 111b; 111c, 111d; 112b, 112c et le flux généré par les aimants (non représentés) est alors maximum et c'est une position d'équilibre à l'arrêt. Si on injecte du courant dans les bobines, le couple hybride est non nul et autorise ainsi un démarrage de l'actionneur.

Dans la position angulaire représentée en figure 12, chaque dent 113, 114, 115 de la partie de commutation extérieure 110 recouvre spatialement une dent statorique 111b, 112c, 111d. Mais la surface de transfert de flux dans cette position est cependant inférieure à celle obtenue dans la position angulaire représentée en figure 11. Il en va de même pour le flux généré par les aimants.

Si on considère maintenant un actionneur selon l'invention constitué d'un ensemble de modules actionneurs élémentaires, on peut prévoir alors un rotor de conception très simple réalisé à partir d'un cylindre creux comportant un ensemble de perforations judicieusement disposées, comme l'illustre de façon développée la figure 13. La partie de commutation rotorique 130 constituée d'un simple cylindre perforé se déplace en vis à vis de plusieurs rangées 131, 132, 133, 134 de dents statoriques 131a-e et assure via des dents équivalentes 132, 133 la commutation des flux magnétiques générés par des aimants (non représentés) disposés entre chaque rangée de dents statoriques.

On va maintenant décrire un second type de structure pour un actionneur selon l'invention, en référence aux figures 14A et 14B. Dans cette structure, les aimants sont axiaux et alternés.

Dans une première version représentée en figure 14A, les aimants sont placés au rotor d'un actionneur 140 dont le stator 149 comprend deux couronnes statoriques 143, 144 entre lesquelles est placé un bobinage global 141, et une culasse extérieure 142. Le rotor 148 comprend sur sa périphérie deux couronnes rotoriques d'extrémité 145, 146 en correspondance avec les deux couronnes statoriques 144, 143, et entre lesquelles sont disposés des aimants permanents alternés axiaux 147a, 147b, 147c, qui peuvent être séparés par des pièces amagnétiques 148a, 148b, 148c. Les couronnes statoriques 144, 143 présentent chacune des dents ou pôles 143a, 143b en nombre égal à la moitié du nombre d'aimants alternés. Les motifs dentaires respectifs des deux couronnes statoriques sont décalées d'un angle électrique de 90 degrés.

Dans une seconde version représentée en figure 14B, les aimants alternés sont placés au stator. Un actionneur 190 selon l'invention comprend une partie d'induit statorique 198 comportant deux couronnes statoriques 191, 192 entre lesquelles sont insérés d'une part, une couronne 193 d'aimants alternés axiaux 193a, 193b, et d'autre part, un bobinage global 194. A chaque aimant alterné est associé un pôle statorique de chaque couronne statorique. La partie de commutation rotorique 195 comprend une partie cylindrique creuse 199 et à chaque extrémité une couronne rotorique 195, 196 respectivement en correspondance avec une couronne statorique 192, 191. Chaque couronne rotorique comprend des dents ou pôles rotoriques 196a, 196b en nombre égal à la moitié du nombre d'aimants alternés. Comme pour l'ensemble des structures d'actionneur selon l'invention, les paramètres angulaires caractéristiques satisfont à la condition géométrique: $\theta_r \geq \theta_s + \theta_b$.

On peut également généraliser ce type de structure à aimants axiaux alternés, en prévoyant par exemple une mise en série, des aimants indifféremment au rotor et au stator, ou encore des structures n-polaires. Par ailleurs, le bobinage étant un simple solénoïde, on peut ainsi réaliser des machines très plates, principalement grâce à l'absence de têtes de bobine. Ce type de structure se prête bien à une miniaturisation du fait de l'utilisation d'un bobinage solénoïdal unique.

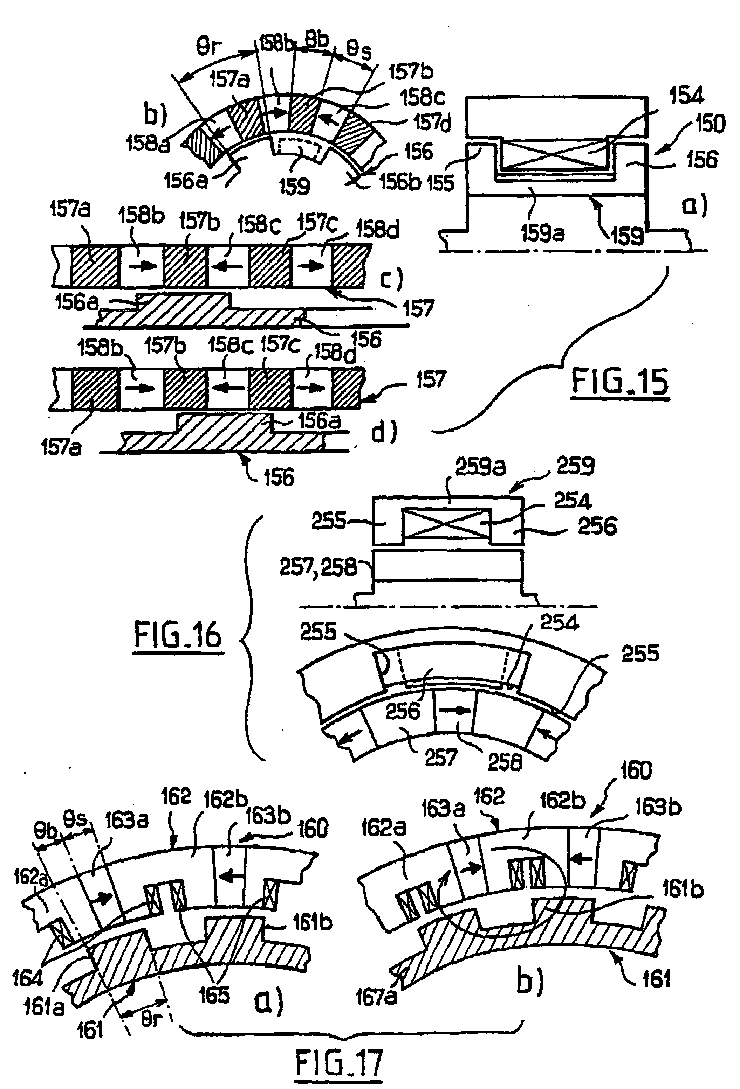

Dans une troisième structure d'actionneur selon l'invention, en référence aux figures 15 à 18, les aimants sont disposés azimutalement, aussi bien au stator qu'au rotor.

Dans une première version de cette troisième structure, représentée en figure 15, les aimants sont disposés au stator et le bobinage d'induit est solénoïdal. Ainsi, un actionneur 150 comprend (figure 15 a)b)) une partie de commutation rotorique conductrice du flux 159 comprenant une partie cylindrique 159a reliée à chaque extrémité à une couronne rotorique 155, 156 comprenant chacune un ensemble de dents rotoriques 156a, 156b. Le stator de l'actionneur 150 comprend, le long de la circonférence, des pièces polaires statoriques 157a, 157b qui alternent avec des aimants alternés 158a, 158b, 158c disposés azimutalement et séparés par les pièces polaires 157a, 157b destinés à collecter les flux générés par les aimants et à les injecter dans l'entrefer. Les deux ensembles de dents rotoriques sont décalés l'un par rapport à l'autre de sorte que lorsqu'une dent 156a d'un ensemble 156 se place devant une pièce polaire statorique 157a, la dent décalée correspondante de l'autre ensemble 155 se place devant la pièce polaire suivante 157b du stator. Le nombre de dents de chaque ensemble est égal à la moitié du nombre de pièces polaires statoriques.

Chaque aimant a un sens d'aimantation contraire à celui des deux aimants voisins. Les dents 156a, 156b de chaque couronne rotorique 155 ou 156 sont deux fois moins nombreuses que les pièces polaires rotoriques 157a, 157b. Les dents rotoriques 155 ont par rapport aux dents rotoriques 156 de l'autre couronne un décalage angulaire égal au pas angulaire entre les pièces polaires statoriques 157a, 157b,... Le stator comprend en outre un bobinage global de type solénoïdal 154 monté radialement à l'intérieur des pièces polaires 157a, 157b,...et des aimants 158a, 158b,..., et autour du cylindre 159a, axialement entre les deux couronnes rotoriques 155, 156.

Deux positions angulaires particulières sont représentées en c) et d). Dans une première position c), une dent rotorique 156a se trouve en vis à vis d'une pièce polaire statorique 157b. Du fait des conditions géométriques selon l'invention, cette position angulaire est instable. Dans une seconde position d), la dent rotorique 156a est placée en vis à vis d'un aimant azimutal 158c et en vis à vis partiel des pièces polaires 157b, 157c entourant cet aimant. Cette position, qui a pour effet de court-circuiter l'aimant 158c, est stable en l'absence d'alimentation du bobinage. Cette position constitue la position de démarrage. La face polaire de chaque dent rotorique a une étendue angulaire supérieure ou égale à la somme des étendues angulaires d'une pièce polaire statorique et d'un aimant, et inférieure à la somme des étendues angulaires d'un aimant et de deux pièces polaires.

L'exemple de la figure 16 correspond à une interversion par rapport à celui de la figure 15. Le commutateur de flux 259 se trouve au stator, radialement à l'extérieur, et ses dents 255, 256 sont dirigées radialement vers l'intérieur. La succession d'aimants azimutaux 258 séparés par des pièces polaires 257 se trouve au rotor, radialement à l'intérieur. Le bobinage global 254 est toujours statorique, il est maintenu radialement à l'intérieur du cylindre 259a du commutateur de flux 259, et entoure les pièces polaires et aimants du stator.

Dans une seconde version de la structure à aimants azimutaux, illustrée en figure 17, les aimants 163a, 163b sont placés au stator 162 d'un actionneur 160 et le circuit magnétique statorique est constitué de plusieurs circuits magnétiques locaux 162a, 162b ayant un profil en forme de U s'ouvrant vers l'axe. Le rotor 161 comprend des dents rotoriques 161a, 161b s'étendant sur toute la longueur axiale. Entre chaque circuit en forme de U 162a, 162b, des aimants alternés azimutaux sont disposés. Des bobinages répartis 164, 165 enserrent chaque aimant 163a, 163b et les bras des circuits en forme de U qui sont contigus à cet aimant et constituent des pôles statoriques. L'ouverture angulaire de chaque dent rotorique doit être supérieure à la somme de l'ouverture angulaire d'un pôle statorique (un bras d'un circuit en forme de U) et d'un aimant azimutal. Dans une première position a), chaque dent rotorique se trouve en vis à vis d'un aimant azimutal et deux pôles statoriques entourant ledit aimant. En l'absence d'alimentation des bobinages, cette position est une position d'équilibre stable et constitue la position de démarrage. Dans une seconde position b), chaque dent rotorique 161a, 161b est en vis à vis d'un bras du circuit en forme de U 162a, 162b. En l'absence d'alimentation des bobinages, cette seconde position est une position d'équilibre instable.

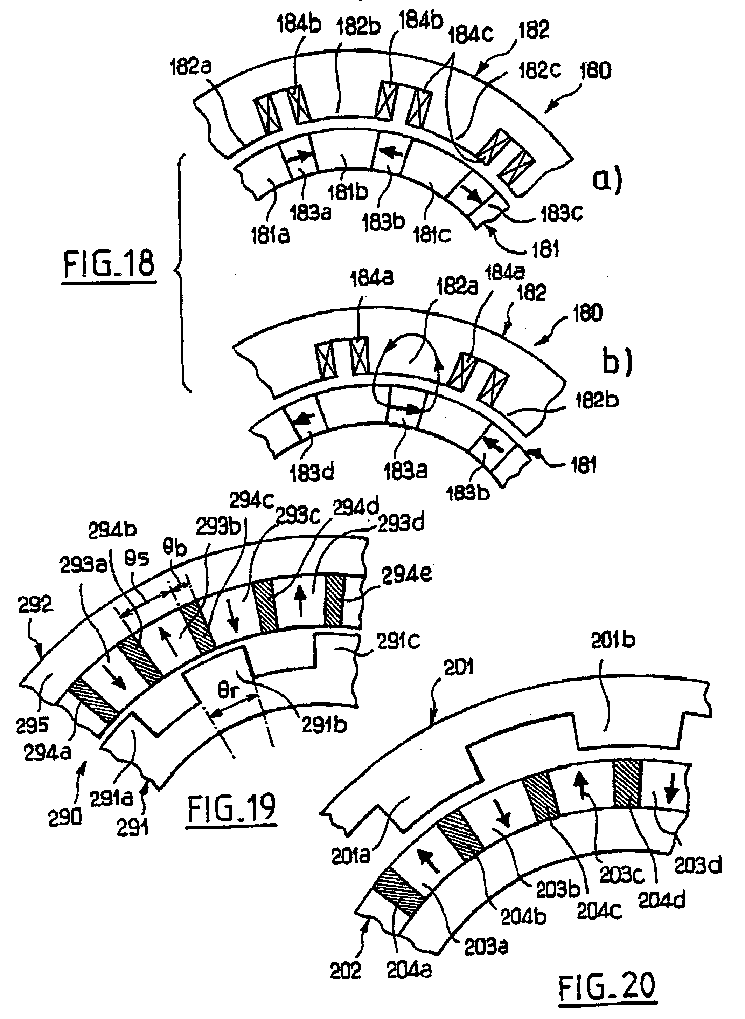

Dans une variante de la version précédente, représentée en figure 18, les aimants azimutaux 183a-c sont placés au rotor 181 et les bobinages 184b, 184c sont locaux. Le rotor 181 de cette forme d'actionneur 180 comprend alors un ensemble d'aimants alternés azimutaux 183a, 183b, 183c séparés par des pièces polaires rotoriques 181a, 181b, 181c en forme de barrettes axiales. Le partie de commutation qui est cette fois statorique comprend des dents ou pôles statoriques 182a, 182b s'étendant sur toute la longueur axiale et entourées chacune par un bobinage. Dans une première position a), chaque pièce polaire rotorique 181a, 181b, 181c est en vis à vis d'une pièce polaire statorique 182a, 182b, 182c. Cette position est une position d'équilibre instable au profit d'une seconde position caractéristique b) dans laquelle chaque aimant 183d, 183a, 183b est en vis à vis d'une dent statorique 182a, 182b et se trouve en quelque sorte court-circuité. Cette dernière position constitue une position de démarrage.

Dans une quatrième structure d'actionneur selon l'invention, en référence aux figures 19 et 20, les aimants sont disposés radialement, aussi bien au stator qu'au rotor.

Dans une première version de cette quatrième structure, représentée en figure 19, les aimants sont disposés radialement au stator et le bobinage d'induit est solénoïdal. Ainsi, un actionneur 290 comprend à chaque extrémité de son rotor une couronne rotorique 291 comprenant un ensemble de dents rotoriques 291a, 291b, 291c. Le stator 292 de l'actionneur 290 comprend, à l'intérieur d'une carcasse cylindrique 295, le long de sa circonférence, des aimants alternés 293a, 293b, 293c, 293d, disposés radialement et pouvant être séparés par des pièces en matériau isolant amagnétique 294a, 294b, 294c, 294d, 294e. Les deux ensembles de dents rotoriques ou les bagues d'aimants statoriques, sont décalés l'un par rapport à l'autre de sorte que lorsqu'une dent d'un ensemble se place devant un aimant, la dent décalée correspondante de l'autre ensemble se place devant l'aimant du stator de polarité différente. Le nombre de dents de chaque ensemble est égal à la moitié du nombre d'aimants statoriques. La position angulaire représentée en figure 19 est une position d'équilibre procurant un couple hybride non nul.

Une variante de cette quatrième structure consiste à placer les aimants permanents au rotor, en référence à la figure 20. Dans cette variante, la partie de commutation de flux est constituée par le stator 201 d'un actionneur 200, ce stator étant réalisé de façon à présenter des pôles statoriques 201a, 201b. Le rotor 202 de l'actionneur 200 comprend sur sa périphérie un ensemble d'aimants alternés 203a, 203b, 203c, 203d, séparés par des pièces en matériau isolant amagnétique 204a, 204b, 204c, 204d. La position angulaire représentée en figure 20 correspond également à une position d'équilibre procurant un couple hybride non nul.

Bien sûr, des modifications ou variantes sont possibles dans le cadre des revendications ci-après. Ainsi, les circuits magnétiques statoriques et rotoriques peuvent être réalisés, soit à partir de tôles, soit par moulage ou encore à partir de poudres de fer. Les aimants permanents peuvent être de toute nature et en particulier des aimants terres-rares, peuvent être massifs ou fragmentés. On peut prévoir des actionneurs selon l'invention sous la forme d'un empilage d'actionneurs élémentaires. Les bobinages peuvent être réalisés de manière très simple et de préférence préfabriqués puis emmanchés sur les dents ou pôles. Enfin, suivant des considérations classiques de l'électrotechnique, tout ce qui vient d'être décrit pour des actionneurs de type rotatif peut être étendu à des actionneurs linéaires ou courbes, dans la mesure où les principes physiques mis en jeu et les moyens mis en oeuvre sont semblables.

D'autre part, à partir de machines monophasées selon l'invention, il est toujours possible d'obtenir des machines polyphasées en mettant en série, par exemple en ligne, n machines monophasées convenablement déphasées les unes par rapport aux autres.

**Revendications**

1. Actionneur hybride monophasé à commutation de flux (10, 40, 50, 80, 90, 100, 140, 150, 160, 180, 190) comprenant une partie fixe d'induit comportant des pièces magnétiques statoriques (15, 16; 450; 51, 55; 81; 93, 94; 191, 192; 103; 143, 144; 151, 152; 162; 182) munies de pôles ou dents statoriques (15a-d, 450a-d, 511-514, 811-818, 103a-f) et un ou plusieurs bobinages d'induit (12, 107a-f, 141, 154), une partie mobile (13, 20, 30, 42, 53, 83, 97, 195, 101, 148, 156, 161, 181) agencée pour commuter du flux magnétique et pourvue de pôles ou dents de commutation, et des moyens d'aimentation permanente (14, 430-433, 56, 91, 92, 193, 147, 158a-c, 163a-b, 183a-c), les parties respectivement d'induit et de commutation présentent des caractéristiques géométriques étant liées par au moins une condition géométrique prédeterminée :

$$\theta_r \geq \theta_s + \theta_b$$

où $\theta_r$, $\theta_s$ et $\theta_b$ représentent respectivement l'ouverture angulaire d'un pôle ou dent de commutation, l'ouverture angulaire d'un pôle ou dent induit, et l'ouverture angulaire d'un espace inter-pôles ou inter-dents d'induit, **caractérisé en ce que** les moyens d'aimentation permanente (14, 430-433, 56, 91, 92, 193, 147, 158a-c, 163a-b, 183a-c) coopèrent avec la partie mobile de commutation pour générer un ou plusieurs flux magnétiques qui sont alternativement commutés à travers le ou les bobinages d'induit (12, 107a-f, 141, 154), par passage dans ladite partie mobile de commutation (13, 20, 30, 42, 53, 83, 97, 195, 101, 148, 156, 161, 181), ladite partie mobile de commutation de flux comportant au moins deux ensembles de commutation (17, 18; 23, 24; 196, 197; 155, 156) dotés de pôles ou dents de commutation (531, 532; 831-834, 196a-b, 156a-b, 191a-b) et reliés entre eux par une pièce ferromagnétique (22, 199, 159a), et la partie d'induit comprenant des pôles ou dents d'induit en correspondance avec les deux dents ou pôles des deux ensembles de commutation (17, 18; 23, 24; 196, 197; 155, 156).

2. Actionneur (10, 40, 50, 80, 90, 100) selon la revendication 1, **caractérisé en ce qu'**il comprend, au titre des moyens d'aimantation permanente, un ou plusieurs aimants permanents (14, 430-433, 56, 91, 92) disposés axialement et générant un flux magnétique global qui est alternativement commuté par passage dans la partie de commutation (13, 42, 53, 83, 97, 101).

3. Actionneur selon la revendication 2, **caractérisé en ce que** le ou les aimants axiaux sont disposés sur le rotor dudit actionneur.

4. Actionneur (10, 40, 50, 80, 90, 100) selon la revendication 2, **caractérisé en ce que** le ou les aimants axiaux (14, 430-433, 56, 91, 92) sont disposés sur le stator dudit actionneur (10, 40, 50, 80, 90, 100) et **en ce que** la partie d'induit statorique comprend deux parties statoriques (15, 16; 450; 51, 52; 93-96; 103) dotées de dentes ou pôles statoriques, ces parties statoriques présentant des strucutres et positions angulaires identiques, entre lesquelles sont disposés un ou plusieurs aimants permanents axiaux (14, 430-433, 56, 91, 92) pour générer un flux magnétique global.

5. Actionneur (10, 50, 80, 90, 100) selon la revendication 4, **caractérisé en ce que** la partie de commutation comprend une portion centrale cylindrique (19, 199) comportant à chacune de ses extrémités une partie rotorique (831, 101) agencée pour être en correspondance avec une partie statorique (15, 16; 450; 51, 52; 93-96; 103), chaque partie rotorique comprenant un nombre de dents ou pôles moitié du nombre de dents ou pôles de la partie statorique correspondante.

6. Actionneur (40) selon la revendication 1, **caractérisé en ce que** la partie de commutation (42) comprend un cylindre (30) en matériau magnétique préalablement usiné pour être pourvu sur sa périphérie d'une couronne (32) inclinée sur la longueur de ce cylindre, cette couronne (32) assurant une fonction de commutation progressive de flux d'une pièce statorique (450) à l'autre (451).

7. Actionneur réalisé par la mise en série de plusieurs actionneurs selon l'une des revendications 4 à 6.

8. Actionneur (90) selon la revendication 2, **caractérisé en ce que** la partie d'induit statorique comprend deux parties cylindriques concentriques (101, 102) respectivement extérieure et intérieure comportant à chacune de leurs extrémités respectivement une première et une seconde pièces statoriques extérieures (93, 94) et une première et une seconde pièces statoriques intérieures (96, 95) comportant chacune des dents ou pôles statoriques un ou plusieurs aimants axiaux globaux de forme annulaire respectivement extérieurs et intérieurs (91; 92) étant disposés respectivement entre les première et seconde pièces statoriques extérieures (93, 94) et entre les première et seconde pièces statoriques intérieures (95, 96), **en ce que** le rotor (97) est en forme de cloche et comprend une partie cylindrique rotorique (98) faisant partie de commutation, et **en ce que** cette partie cylindrique (98) est perforée pour constituer deux ensembles de pôles de commutation respectivement en vis à vis des dents ou pôles statoriques des première et seconde pièces statoriques respectivement intérieures (95, 96) et extérieures (93, 94), le nombre de dents ou pôles d'un ensemble étant moitié du nombre de dents ou pôles statoriques de la pièce statorique correspondante.

9. Actionneur constitué de la mise en série de plusieurs actionneurs selon la revendication 8, **caractérisé en ce que** la partie cylindrique de commutation est perforée pour constituer autant d'ensembles de pôles de commutation que le nombre de pièces statoriques.

10. Actionneur (100) selon la revendication 2, **caractérisé en ce que** la partie d'induit fixe (103) est intérieure et comprend au moins deux parties statoriques comportant plusieurs pôles ou dents statoriques (103a-f) et entre lesquelles sont disposés des moyens d'aimantation permanente pour générer un flux magnétique axial, et **en ce que** la partie de commutation mobile (101) comporte un cylindre extérieur entourant la partie de commutation et comprenant plusieurs ensembles de perforations (101a-c), chaque ensemble de perforations correspondant à une pièce statorique et le nombre de perforations par ensemble étant moitié du nombre de dents ou pôles statoriques d'une pièce statorique.

11. Actionneur (190, 140) selon la revendication 1, caractérisé en ce qu'il comprend, au titre des moyens d'aimantation permanente, des aimants alternés (193a-b, 147a-c> disposés axialement, et ce que la partie de commutation comprend au moins deux pièces rotoriques (195, 196; 145, 146) comportant chacune des dents ou pôles rotoriques en nombre moitié du nombre d'aimants alternés (193a-b, 147a-c).

12. Actionneur (140) selon la revendication 11, **caractérisé en ce que** ces aimants alternés (147a-c) sont disposés axialement sur le rotor (148) dudit actionneur (140), **en ce que** ce rotor (148) comprend en outre deux ensembles de pièces polaires (148a-b) disposées respectivement aux extrémités de chaque aimant pour diriger radialement le flux généré par cet aimant, chaque ensemble étant en correspondance avec une pièce statorique et constituant la partie de commutation, et **en ce que** la partie d'induit comprend un bobinage global de type sinusoïdal (141) inséré entre les deux pièces statoriques (143, 144).

13. Actionneur (190) selon la revendication 11, **caractérisé en ce que** les aimants alternés (193a-b) sont disposés axialement sur le stator (198) dudit actionneur (190) entre les deux pièces statoriques (191, 192) qui enserrent également un bobinage global de type solénoïdal (194) et **en ce que** la partie de commutation comprend une pièce cylindrique (199) comportant à ses extrémités deux pièces de commutation (195, 196) respectivement en vis à vis des pièces statoriques (192, 191).

14. Actionneur (150, 160, 180) selon la revendication 1, **caractérisé en ce qu'**il comprend, au titre des moyens d'aimantation permanente, des aimants alternés disposés azimutalement (158a-c 163a-b, 183a-c).

15. Actionneur (150) selon la revendication 14, **caractérisé en ce que** la partie d'induit comprend deux pièces statoriques d'extrémité, dans lesquelles sont disposés les aimants alternés azimutaux (158a-c) et des pièces polaires (157a-c) intercalées entre ces aimants, et un bobinage global de type solénoïdal (154), et **en ce que** la partie de commutation comprend une portion cylindrique (159a) comportant à ses extrémités deux pièces rotoriques (155, 156) correspondant respectivement aux pièces statoriques (152, 151) et présentant un nombre de pôles ou de dents moitié du nombre d'aimants alternés.

16. Actionneur selon la revendication 14, **caractérisé en ce que** les aimants azimutaux sont disposés au rotor dudit actionneur, ce rotor constituant la partie de commutation et comprenant en outre des pièces polaires disposées entre chaque aimant alterné et en nombre deux fois supérieur au nombre de pôles ou dents de chaque pièce statorique.

17. Actionneur (160) selon la revendication 14, **caractérisé en ce que** la partie d'induit comprend plusieurs circuits magnétiques locaux (162a, 162b) en forme de U à chacun desquels est associé un bobinage local d'induit et entre chacun desquels sont disposé5 des aimants alternés azimutaux (163a, 163b).

18. Actionneur (180) selon la revendication 14, **caractérisé en ce que** les aimants azimutaux (183a, 183b) sont disposés au rotor dudit actionneur, qui comprend en outre des pièces polaires (181a, 181b, 181c) disposées entre chaque aimant alterné et en nombre égal au nombre de pôles ou dents de chaque pièce statorique, et **en ce que** le bobinage est global de type solénoïdal.

19. Actionneur selon la revendication 1, **caractérisé en ce qu'**il comprend, au titre des moyens d'aimantation permanente, des aimants permanents disposés radialement.

20. Actionneur selon la revendication 19, **caractérisé en ce que** les aimants permanents sont disposés au stator et le bobinage d'induit est solénoïdal.

21. Actionneur selon la revendication 20, **caractérisé en ce qu'**il comprend une partie de commutation rotorique conductrice comprenant une partie cylindrique dont les deux extrémités sont reliées respectivement à deux couronnes rotoriques comprenant chacune un ensemble de dents rotoriques.

22. Actionneur selon la revendication 19, **caractérisé en ce que** les aimants permanents sont disposés au rotor.

23. Actionneur selon l'une des revendications précédentes, caractérisé en ce qu[1]il est associé à des moyens d'alimentation et de commande agencés pour permettre un mode de fonctionnement autopiloté.

24. Actionneur selon l'une des revendications précédentes, **caractérisé en ce que** les moyens d'alimentation et de commande sont agencés pour permettre un mode de fonctionnement pas-à-pas.

25. Actionneur selon l'une des revendications précédentes, **caractérisé en ce que** les moyens d'alimentation et de commande sont agencés pour permettre un mode de fonctionnement synchrone.

26. Actionneur selon l'une des revendications précédentes, **caractérisé en ce que** les moyens d'alimentation et de commande sont agencés pour permettre un mode de débattement limité.

27. Actionneur selon l'une des revendications précédentes, **caractérisé en ce que** la partie d'induit est agencée de façon à pouvoir recevoir des bobinages d'induit sous la forme de pièces rapportées.

**Patentansprüche**

1. Einphasiger Hybridbetätiger mit Flußkommutierung (10, 40, 50, 80, 90, 100, 140, 150, 160, 180, 190) mit einem festen Ankerteil, welcher mit Statorpolen oder Statorzähnen (15a-d, 450a-d, 511-514, 811-818, 103a-f) versehene magnetische Statorteile (15, 16; 450; 51, 55 ; 81; 93, 94 ; 191, 192 ; 103; 143, 144; 151, 152; 162; 182) und eine oder mehrere Ankerwiklungen (12, 107a-f, 141, 154) besitzt, einem mobilen Teil (13, 20, 30, 42, 53, 83, 97, 195, 101, 148, 156, 161, 181), der so angeordnet ist, dass er den Magnetfluß kommutiert und der mit Kommutierungspolen oder -zähnen versehen ist, und mit Permanentmagnetisiervorrichtungen (14, 430-433, 56, 91, 92, 193, 147, 158a-c, 163a-b, 183a-c), wobei die Anker- bzw. Kommutierungsteile charakteristische geometrische Kenndaten aufweisen, die durch mindestens eine vorbestimmte geometrische Bedingung miteinander verknüpft sind :

$$\theta_r \geq \theta_s + \theta_b$$

wobei gilt, $\theta_r$, $\theta_s$ und $\theta_b$ stellen jeweils die Winkelöffnung eines Kommutierungspols oder -zahns, die Winkelöffnung eines Ankerpols oder Ankerzahns und die Winkelöffnung eines Raums zwischen Ankerpolen oder zwischen Ankerzähnen, dar, **dadurch gekennzeichnet, dass** die Permanentmagnetisiervorrichtungen (14, 430-433, 56, 91, 92, 193, 147, 158a-c, 163a-b, 183a-c) mit dem mobilen Kommutierungsteil zusammenwirken, um einen oder mehrere magnetische Flüsse zu erzeugen, die alternativ über die Ankerwicklung(en) (12, 107a-f, 141, 154) durch Fließen im oben genannten mobilen Kommutierungsteil (13, 20, 30, 42, 53, 83, 97, 195, 101, 148, 156, 161, 181) kommutiert werden, wobei dieser mobile Flusskommutierungsteil mindestens zwei Kommutierungsgruppen (17, 18; 23, 24; 196, 197; 155, 156) besitzt, die mit Kommutierungspolen oder -zäbnen (531, 532; 831-834, 196a-b, 156a-b, 191a-b) versehen und untereinander durch ein ferromagnetisches Teil (22, 199, 159a) verbunden sind, und wobei der Ankerteil Ankerpole oder -zähne besitzt, die von der Position her den beiden Zähnen oder Polen der beiden Kommutierungsgruppen (17, 18; 23, 24; 196, 197; 155, 156) entsprechen.

2. Betätiger (10, 40, 50, 80, 90, 100) gemäß Anspruch 1, **dadurch gekennzeichnet, dass** er, was die Permanentmagnetisiervorrichtungen anbelangt, einen oder mehrere Permanentmagneten (14, 430-433, 56, 91, 92) umfasst, die axial angeordnet sind und einen globalen magnetischen Fluss erzeugen, der abwechselnd durch Fließen im Kommutierungsteil (13, 42, 53, 83, 97, 101) kommutiert wird.

3. Betätiger gemäß Anspruch 2, **dadurch gekennzeichnet, dass** der oder die axialen Magneten am Rotor dieses Betätigers angeordnet sind.

4. Betätiger (10, 40, 50, 80, 90, 100) gemäß Anspruch 2, **dadurch gekennzeichnet, dass** der oder die axialen Magnete (14, 430-433, 56, 91, 92) am Stator dieses Aktors (10, 40, 50, 80, 90, 100) angeordnet sind, sowie dadurch, dass der Statorankerteil zwei Statorteile (15, 16; 450; 51, 52; 93-96;103) umfasst, die mit Statorzähnen oder Statorpolen versehen sind, wobei diese Statorteile einen identischen Aufbau und identische Winkelstellungen haben, zwischen denen ein oder mehrere axiale Permanentmagnete (14, 430-433, 56, 91, 92) angeordnet sind, um einen globalen magnetischen Fluss zu erzeugen.

5. Betätiger (10, 50, 80, 90, 100) gemäß Anspruch 4, **dadurch gekennzeichnet, dass** der Kommutierungsteil einen mittleren zylindrischen Abschnitt (19, 199) umfasst, der an jedem seiner Enden einen Rotorteil (831, 101) besitzt, welcher so angeordnet ist, dass er von der Position her dem Statorteil (15, 16; 450; 51, 52; 93-96; 103) entspricht, wobei jeder Rotorteil so viele Zähne oder Pole besitzt, die gleich der Hälfte der Anzahl von Zähnen oder Polen des entsprechenden Statorteils entsprechen.

6. Betätiger (40) gemäß Anspruch 1, **dadurch gekennzeichnet, dass** der Kommutierungsteil (42) einen Zylinder (30) aus magnetischem Werkstoff umfasst, der zuvor maschinell so bearbeitet wurde, dass er außen herum mit einer Krone (32) versehen ist, die auf der Länge dieses Zylinders geneigt ist, wobei diese Krone (32) die progressive Flusekommutierung von einem Statorteil (450) zum anderen (451) sicherstellt.

7. Betätiger realisiert durch die Reihenschaltung mehrerer Betätiger gemäß einem der Ansprüche 4 bis 6.

8. Betätiger (90) gemäß Anspruch 2, **dadurch gekennzeichnet, dass** der Statorankerteil zwei konzentrische zylindrische Teile (101, 102) umfasst, respektive einen Außen- und einen Innenteil, die an jedem ihrer Enden einen ersten und einen zweiten äußeren Statorteil (93, 94) und einen ersten und einen zweiten inneren Statorteil (96, 95) besitzen, von denen jeder Statorzähne oder Statorpole besitzt, wobei ein oder mehrere globale axiale ringförmige, äußere bzw. innere Magnete (91; 92) zwischen dem ersten und dem zweiten äußeren Statorteil (93, 94) und zwischen dem ersten und dem zweiten inneren Statorteil (95, 96) angeordnet sind, wobei der Rotor (97) Glockenform hat und einen zylindrischen Rotorteil (98) besitzt, der den Kommutierungsteil darstellt, sowie **dadurch gekennzeichnet, dass** dieser zylindrische Teil (98) perforiert ist, so dass er zwei Kommutierungspolgruppen bildet, jeweils gegenüber den Statorzähnen oder Statorpolen des ersten und des zweiten Statorteils, respektive inneres (95, 96) und äußeres (93, 94), wobei die Anzahl der Zähne oder Pole einer Gruppe halb so groß ist wie die Anzahl der Statorzähne oder Statorpole des entsprechenden Statorteils.

9. Betätiger bestehend aus der Serienschaltung von mehreren Betätigern gemäß Anspruch 8, **dadurch gekennzeichnet, daß** der zylindrische Kommutierungsteil perforiert ist, so daß so viele Kommutierungspolgruppen entstehen wie Statorteile vorhanden sind.

10. Betätiger (100) gemäß Anspruch 2, **dadurch gekennzeichnet, dass** der feststehende Ankerteil (103) innen liegt und mindestens zwei Statorteile umfasst, welche mehrere Statorpole oder Statorzähne (103a-f) besitzen, zwischen denen die Permanentmagnetisierungsvorrichtungen angeordnet sind, die einen axialen Magnetfluss erzeugen, sowie dadurch, dass der mobile Kommutierungsteil (101) einen äußeren Zylinder besitzt, der den Kommutierungsteil umgibt und mehrere Perforationsgruppen (101a-c) besitzt, wobei jede Perforationsgruppe einem Statorteil entspricht und die Anzahl der Perforationen pro Gruppe halb so groß ist wie die Anzahl von Statorzähnen oder Statorpolen eines Statorteils.

11. Betätiger (190, 140) gemäß Anspruch 1, **dadurch gekennzeichnet, dass** er, was die Permanentmagnetisiervorrichtungen anbelangt, alternierende Magnete (193a-b, 147a-c) besitzt, die axial angeordnet sind, sowie dadurch, dass der Kommutierungsteil mindestens zwei Rotorteile (195, 196; 145, 146) umfasst, von denen jeder halb so viele Rotorzähne oder Rotorpole besitzt wie alternierende Magnete (193a-b, 147a-c) vorhanden sind.

12. Betätiger (140) gemäß Anspruch 11, **dadurch gekennzeichnet, dass** diese alternierenden Magnete (147a-c) axial auf dem Rotor (148) des oben genannten Betätigers (140) angeordnet sind, wobei dieser Rotor (148) ferner zwei Polteilengruppen (148a-b) umfasst, die jeweils an den Enden jedes Magneten angeordnet sind und den von diesem Magneten erzeugten Fluss radial richten, wobei jede Gruppe von der Stellung her einem Statorteil entspricht und den Kommutierungsteil bildet, sowie dadurch, dass der Ankerteil eine globale Wicklung in Solenoidform (141) besitzt, die zwischen den beiden Statorteilen (143, 144) installiert ist.

13. Betätiger (190) gemäß Anspruch 11, **dadurch gekennzeichnet, dass** die alternierenden Magnete (193a-b) axial auf dem Stator (198) des oben genannten Betätigers (190) zwischen den beiden Statorteilen (191, 192), die ebenfalls eine globale Wicklung in Solenoidform (194) umgeben, angebracht sind, und dadurch, dass der Kommitierungsteil einen zylindrischen Teil (199) mit zwei Kommutierungsteilen (195, 196) an den Enden, jeweils gegenüber den Statorteilen (192, 191) angeordnet, umfasst.

14. Betätiger (150, 160, 180) gemäß Anspruch 1, **dadurch gekennzeichnet, dass** er, was die Permanentmagnetisiervorrichtungen anbelangt, azimutal angeordnete alternierende Magnete (158a-c, 163a-b, 183a-c) besitzt.

15. Betätiger (150) gemäß Anspruch 14, **dadurch gekennzeichnet, dass** der Ankerteil zwei Endstatorteile umfasst, in denen die alternierenden azimutalen Magnete (158a-c) und zwischen diese Magnete gesetzte polare Teile (157a-c) angeordnet sind, sowie eine globale Wicklung mit Solenoidform (154), und dadurch, dass der Kommutierungsteil einen zylindrischen Abschnitt (159a) umfasst, der an seinen Enden zwei Rotorteile (155, 156) umfasst, die jeweils den Statorteilen (152, 151) entsprechen und halb so viele Pole oder zähne aufweisen wie alternierende Magnete vorhanden sind.

16. Betätiger gemäß Anspruch 14, **dadurch gekennzeichnet, dass** die azimutalen Magnete am Rotor des oben genannten Betätigers angeordnet sind, wobei dieser Rotor den Kommutierungsteil bildet und ferner polare Teile umfasst, die zwischen jedem alternierenden Magneten angeordnet sind und von der Anzahl her doppelt so viel sind wie Pole oder Zähne jedes Statorteils vorhanden sind.

17. Betätiger (160) gemäß Anspruch 14, **dadurch gekennzeichnet, dass** der Ankerteil mehrere u-förmige lokale Magnetkreise (162a, 162b) umfasst, wobei jedem dieser Kreise eine lokale Ankerwicklung zugeordnet ist und zwischen jedem Kreis alternierende azimutale Magnete (163a, 163b) angeordnet sind.

18. Betätiger (180) gemäß Anspruch 14, **dadurch gekennzeichnet, dass** die azimutalen Magnete (183a, 183b) am Rotor des oben genannten Betätigers angeordnet sind, der ferner polare Teile (181a, 181b, 181c) umfasst, die zwischen jedem alternierenden Magneten angeordnet sind und von der Anzahl her genauso viele sind wie Pole oder Zähne jedes Statorteils vorhanden sind, und dadurch, dass die Wicklung als globale Wicklung mit Solenoidform ausgebildet ist.

19. Betätiger gemäß Anspruch 1, **dadurch gekennzeichnet, dass** er, was die Permanentmagnetisierungsvorrichtungen anbelangt, radial angeordnete Permanentmagnete besitzt.

20. Betätiger gemäß Anspruch 19, **dadurch gekennzeichnet, dass** die Permanentmagnete am Stator angeordnet sind und dass die Ankerwicklung in Solenoidform ausgebildet ist.

21. Betätiger gemäß Anspruch 20, **dadurch gekennzeichnet, dass** er einen leitenden Rotorkomatutierungsteil umfasst, der einen zylindrischen Teil besitzt, dessen beide Enden jeweils mit zwei Rotorkronen verbunden sind, von denen jede eine Gruppe von Rotorzähnen besitzt.

22. Betätiger gemäß Anspruch 19, **dadurch gekennzeichnet, dass** die Permanentmagnete am Rotor angeordnet sind.

23. Betätiger gemäß einem der vorstehenden Ansprüche, **dadurch gekennzeichnet, dass** er mit Versorgungs- und Befehlsmitteln versehen ist, die einen eigengesteuerten Funktionsmodus ermöglichen sollen.

24. Betätiger gemäß einem der vorstehenden Ansprüche, **dadurch gekennzeichnet, dass** die Versorgungs- und Befehlsmittel so angeordnet sind, dass ein Schritt-Funktionsmodus ermöglicht wird.

25. Betätiger gemäß einem der vorstehenden Ansprüche, **dadurch gekennzeichnet, dass** die Versorgungs- und Befehlsmittel so angeordnet sind, dass ein Synchron-Funktionsmodus ermöglicht wird.

26. Betätiger gemäß einem der vorstehenden Ansprüche, **dadurch gekennzeichnet, dass** die Versorgungs- und Befehlsmittel so angeordnet sind, dass ein beschränkter Ausschlagmodus ermöglicht wird.

27. Betätiger gemäß einem der vorstehenden Ansprüche, **dadurch gekennzeichnet, dass** der Ankerteil so angeordnet ist, dass Ankerwicklungen in Form von zusammengesetzten Wicklungen montiert werden können.

**Claims**

1. Flux switching single phase hybrid actuator (10, 40, 50, 80, 90, 100, 140, 150, 160, 180, 190) comprising a fixed armature part comprising magnetic stator pieces (15, 16; 450; 51, 55; 81; 93, 94; 191, 192; 103; 143, 144; 151, 152; 162; 182) equipped with stator poles or teeth (15a-d, 450a-d, 511-514, 811-818, 103a-f) and one or more armature windings (12, 107a-f, 141, 154), a mobile part (13, 20, 30, 42, 53, 83, 97, 195, 101, 148, 156, 161, 181) arranged in order to switch magnetic flux and provided with switching poles or teeth, and permanent power supply means (14, 430-433, 56, 91, 193, 147, 158a-c, 163a-b, 183a-c), the armature and switching parts respectively have geometric characteristics being linked by at least one predetermined geometric condition:

$$\theta_r \geq \theta_s + \theta_b$$

where $\theta_r$, $\theta_s$ and $\theta_b$ respectively represent the angular aperture of a switching pole or tooth, the angular aperture of an armature pole or tooth, and the angular aperture of an armature inter-pole or inter-tooth space, **characterized in that** the permanent power supply means (14, 430-433, 56, 91, 92, 193, 147, 158a-c, 163a-b, 183a-c), cooperate with the mobile switching part in order to generate one or more magnetic fluxes which are alternately switched through the armature winding(s) (12, 107a-f, 141, 154), by passing into said mobile switching part (13, 20, 30, 42, 53, 83, 97, 195, 101, 148, 156, 161, 181), said mobile flux switching part comprising at least two switching assemblies (17, 18; 23, 24; 196, 197; 155, 156) provided with switching poles or teeth (531, 532; 831-834, 196a-b, 156a-b, 191a-b) and interlinked by a ferromagnetic piece (22, 199, 159a), and the armature part comprising armature poles or teeth in correspondence with the two teeth or poles of the two switching assemblies (17, 18; 23, 24; 196, 197; 155, 156).

2. Actuator (10, 40, 50, 80, 90, 100) according to claim 1, **characterized in that** it comprises, as permanent magnetizing means, one or more permanent magnets (14, 430-433, 56, 91, 92) arranged axially and generating a global magnetic flux which is alternately switched by passing into the switching part (13, 42, 53, 83, 97, 101).

3. Actuator according to claim 2, **characterized in that** the axial magnet(s) are arranged on the rotor of said actuator.

4. Actuator (10, 40, 50, 80, 90, 100) according to claim 2, **characterized in that** the axial magnet(s) (14, 430-433, 56, 91, 92) are arranged on the stator of said actuator (10, 40, 50, 80, 90, 100) and **in that** the stator armature part comprises two stator parts (15, 16; 450; 51, 52; 93-96; 103) provided with stator teeth or poles, these stator parts having identical structures and angular positions, between which one or more axial permanent magnets (14, 430-433, 56, 91, 92) are arranged, in order to generate a global magnetic flux.

5. Actuator (10, 40, 50, 80, 90, 100) according to claim 4, **characterized in that** the switching part comprises a cylindrical central portion (19, 199) comprising at each of its ends a rotor part (831, 101) arranged in order to be in correspondence with a stator part (15, 16; 450; 51, 52 93-96; 103), each rotor part comprising a number of teeth or poles half the number of teeth or poles of the corresponding stator piece.

6. Actuator (40) according to claim 1, **characterized in that** the switching part (42) comprises a cylinder (30) of magnetic material previously machined in order to be provided on its periphery with a crown (32) inclined over the length of this cylinder, this cylinder (32) ensuring a progressive flux switching function from one stator piece (450) to another (451).

7. Actuator produced by the arrangement in series of several actuators according to one of claims 4 to 6.

8. Actuator (90) according to claim 2, **characterized in that** the stator armature part comprises two respectively external and internal concentric cylindrical parts (101, 102), comprising at each of their ends respectively a first and a second external stator piece (93, 94), and a first and a second internal stator piece (96, 95), each comprising stator teeth or poles, one or more ring-shaped global axial magnets that are respectively external and internal (91, 92), being arranged respectively between the first and second external stator pieces (93, 94) and between the first and second internal stator pieces (95, 96), **in that** the rotor (97) is bell-shaped and comprises a cylindrical rotor part (98) forming a switching part, and **in that** this cylindrical part (98) is perforated in order to constitute two sets of switching poles respectively facing the stator teeth or poles of the first and second respectively internal (95, 96) and external (93, 94) stator pieces, the number of teeth or poles of a set being half the number of stator teeth or poles of the corresponding stator piece.

9. Actuator constituted by arranging several actuators according to claim 8 in series, **characterized in that** the cylindrical switching part is perforated in order to constitute as many sets of switching poles as the number of stator pieces.

10. Actuator (100) according to claim 2, **characterized in that** the fixed armature part (103) is internal and comprises at least two stator parts comprising several stator poles or teeth (103a-f) and between which permanent magnetizing means are arranged in order to generate an axial magnetic flux, and **in that** the mobile switching part (101) comprises an external cylinder surrounding the switching part and comprising several sets of perforations (101a-c), each set of perforations corresponding to a stator piece and the number of perforations per set being half the number of stator teeth and poles of a stator piece.

11. Actuator (190, 140) according to claim 1, **characterized in that** it comprises, as permanent magnetizing means, alternate magnets (193a-b, 147a-c) arranged axially, and **in that** the switching part comprises at least two rotor pieces (195, 196; 145, 146) each comprising rotor teeth or poles numbering half the number of alternate magnets (193a-b, 147a-c) .

12. Actuator (140) according to claim 11, **characterized in that** these alternate magnets (147a-c) are arranged axially on the rotor (148) of said actuator (140), **in that** this rotor (148) moreover comprises two sets of polar pieces (148a-b) arranged respectively at the ends of each magnet in order to radially direct the flux generated by this magnet, each set being in correspondence with a stator piece and constituting the switching part, and **in that** the armature part comprises a sinusoidal-type global winding (141) inserted between the two stator pieces (143, 144).

13. Actuator (190) according to claim 11, **characterized in that** the alternate magnets (193a-b) are arranged axially on the stator (198) of said actuator (190) between the two stator pieces (191, 192) which also enclose a solenoid-type global winding (194) and **in that** the switching part comprises a cylindrical piece (199) comprising at its ends two switching pieces (195, 196) respectively opposite the stator pieces (192, 191).

14. Actuator (150, 160, 180) according to claim 1, **characterized in that** it comprises, as permanent magnetizing means, alternate magnets arranged azimuthally (158a-c, 163a-b, 183a-c) .

15. Actuator (150) according to claim 14, **characterized in that** the armature part comprises two end stator pieces, in which azimuthal alternate magnets (158a-c) and polar pieces (157a-c) intercalated between these magnets, and a solenoid-type global winding (154) are arranged, and **in that** the switching part comprises a cylindrical portion (159a) comprising at its ends two rotor pieces (155, 156) corresponding respectively to the stator pieces (152, 151) and having a number of poles or teeth which is half the number of alternate magnets.

16. Actuator according to claim 14, **characterized in that** the azimuthal magnets are arranged at the rotor of said actuator, this rotor constituting the switching part and moreover comprising polar pieces arranged between each alternate magnet and numbering twice the number of poles or teeth of each stator piece.

17. Actuator (160) according to claim 14, **characterized in that** the armature part comprises several U-shaped local magnetic circuits (162a, 162b), with each of which a local armature winding is associated, and between each of which azimuthal alternate magnets (163a, 163b) are arranged.

18. Actuator (180) according to claim 14, **characterized in that** the azimuthal magnets (183a, 183b) are arranged on the rotor of said actuator, which moreover comprises polar pieces (181a, 181b, 181c) arranged between each alternate magnet and equal in number to the number of poles or teeth of each stator piece, and **in that** the winding is a solenoid-type global winding.

**19.** Actuator according to claim 1, **characterized in that** it comprises, as permanent magnetizing means, permanent magnets arranged radially.

**20.** Actuator according to claim 19, **characterized in that** the permanent magnets are arranged on the stator and the armature winding is solenoidal.

**21.** Actuator according to claim 20, **characterized in that** it comprises a conductive rotor switching part comprising a cylindrical part, the two ends of which are linked respectively to two rotor crowns each comprising a set of rotor teeth.

**22.** Actuator according to claim 19, **characterized in that** the permanent magnets are arranged on the rotor.

**23.** Actuator according to one of the previous claims, **characterized in that** it is associated with power supply and control means in order to allow an autopilot operating mode.

**24.** Actuator according to one of the previous claims, **characterized in that** the power supply and control means are arranged in order to allow a step-by-step operating mode.

**25.** Actuator according to one of the previous claims, **characterized in that** the power supply and control means are arranged in order to allow a synchronous operating mode.

**26.** Actuator according to one of the previous claims, **characterized in that** the power supply and control means are arranged in order to allow a limited travel mode.

**27.** Actuator according to one of the previous claims, **characterized in that** the armature part is arranged in order to be able to receive armature windings in the form of separate pieces.

FIG.1

FIG.2

FIG.3

FIG.4

FIG.5

FIG.6

FIG.7

EP 0 707 374 B1

FIG.8

FIG.9

FIG.14B

19

FIG.10

FIG.11

FIG.12

FIG.13

FIG.14A

21

**FIG.15**

**FIG.16**

**FIG.17**

FIG.18

FIG.19

FIG.20